# EUROPEAN PATENT SPECIFICATION

(11) **EP 0 702 710 B1**
(45) Date of publication and mention of the grant of the patent: **27.01.1999**
(21) Application number: 95911165.9
(22) Date of filing: 10.03.1995
(51) Int. Cl.: C09J 123/10, C09J 151/06

(54) **POLYPROPYLENE-BASED HOT-MELT ADHESIVE**
HEISSSCHMELZKLEBER AUF POLYPROPYLENEBASIS
COLLE THERMOFUSIBLE A BASE DE POLYPROPYLENE

(30) Priority: 11.03.1994 GB 9404708
(43) Date of publication of application: 27.03.1996
(73) Proprietor: DUPONT CANADA INC., Mississauga, Ontario L5M 2H3 (CA)
(72) Inventor: ARTHURS, Trevor, Curtis, Truro, Nova Scotia B2N 6J9 (CA); KELLY, Peter, Yates, Kingston, Ontario K7L 4X6 (CA); BRYCE, Wayne, Frederick, Camlachie, Ontario N0N 1E0 (CA); MITCHELL, David, John, Kingston, Ontario K7L 4J1 (CA)
(74) Representative: Harrison, David Christopher
(86) International application number: CA9500132
(87) International publication number: WO9524449

(56) References cited:
- EP-A- 0 370 786
- WO-A-93/11175
- US-I- T 972 002

## Description

The present invention relates to a polypropylene-based hot-melt adhesive composition which is capable of bonding a polypropylene substrate to another substrate. In particular, the present invention relates to a polypropylene-based hot-melt adhesive composition that is capable of being applied so as to bond two polypropylene-based substrates together and also be capable of being subjected to recycling processes for polypropylene.

Structures may be bonded together using a variety of adhesives. One adhesive that is relatively easy to apply while still providing good bonding properties is an isocyanate-containing polyurethane adhesive, which may be sprayed onto a substrate and then subsequently cured to provide a strong bond strength. In particular, use of water-based polyurethane adhesives is known for the bonding of polypropylene substrates to another substrate e.g. the bonding of mica-filled polypropylene to a woven polyester fabric. However, the use of such polyurethane adhesives in lamination processes represents an occupational health risk and major precautions must be taken during operation of the process in order to protect the personnel involved. It would be desirable to have alternate processes that do not use polyurethane adhesives.

The grafting of ethylenically-unsaturated carboxylic acids or anhydrides onto polyolefins is described in U.S. Patent 4 612 155 of R.A. Zelonka and C.S. Wong, which issued September 16, 1986.

U.S. Patent 5 241 014 of H. Kehr et al. discloses the production of largely amorphous polyalpha-olefins with a narrow molecular weight distribution by subjecting largely amorphous polyalpha-olefins containing 3-75 weight percent of C₄-C₁₀ alpha-olefin, 25-95 weight percent of propylene and 0-20 weight percent ethylene monomer units to a shearing force at a temperature above the softening point of the polymer in the presence of a radical donor. Grafting reactions may be conducted at the same time. The polymers are stated to be useful as hot-melt adhesives.

U.S. Patent 4 719 260 of R.K. Stuart et al. discloses hot-melt adhesive compositions useful for bonding polyethylene, that contain amorphous polypropylene polymers and grafted copolymers of saturated polycyclic hydrocarbon resins and maleic anhydride. U.S. 4 554 304 of D.R. Hansen et al. discloses hot-melt adhesive compositions formed from butene/ethylene copolymers that have been grafted with maleic anhydride and aliphatic non-polar resins.

EP-A-0 370 786 discloses a polypropylene resin composition useful as an adhesive the composition being a grafted polypropylene resin and an ethylene/propylene copolymer rubber. WO 93/11175 discloses an adhesive blend, comprising a grafted ethylene/propylene copolymer and a blending resin. US-T-972002 discloses an adhesive composition of propylene polymer and a grafted ethylene polymer.

An adhesive has been found that is capable of bonding one polypropylene substrate to another substrate, especially mica-filled polypropylene, foam polypropylene or a woven polypropylene, and be capable of being recycled with polypropylene.

Accordingly, the present invention provides an adhesive composition comprising a melt blend of:
(a) 50-95% by weight of polypropylene, or a copolymer of propylene and ethylene in which the ethylene content is less than 25% by weight, that has been grafted with up to 5% by weight of at least one ethylenically-unsaturated carboxylic acid or anhydride, or derivative thereof; and
(b) 5-50% by weight of at least one copolymer of ethylene and at least one comonomer selected from carbon monoxide, vinyl acetate, alkyl acrylates, alkyl methacrylates, in which the alkyl group has 1-4 carbon atoms, acrylic acid and methacrylic acid, and ethylene/propylene/diene copolymers, said ethylene/propylene/diene copolymer having a Mooney viscosity of less than 20 at 125°C, said copolymer having been grafted with up to 5% by weight of at least one ethylenically-unsaturated carboxylic acid or anhydride, or derivative thereof.

In a preferred embodiment of the blend of the invention, the blend is in the form of a melt blend.

In another embodiment, the grafted copolymer of (a) has a melt index in the range of 100-500 dg/min.

In still another embodiment, the copolymer of (b) has been grafted with 0.5-2.0% by weight of the ethylenically unsaturated carboxylic acid or anhydride, or derivative thereof.

In addition, the present invention provides a process for the bonding of a first substrate to a second substrate comprising coating the first substrate with a molten composition of a blend of:
(a) 50-95% by weight of polypropylene, or a copolymer of propylene and ethylene in which the ethylene content is less than 25% by weight, that has been grafted with up to 5% by weight of at least one ethylenically-unsaturated carboxylic acid or anhydride, or derivative thereof; and
(b) 5-50% by weight of at least one copolymer of ethylene and at least one comonomer selected from carbon monoxide, vinyl acetate, alkyl acrylates, alkyl methacrylates, in which the alkyl group has 1-4 carbon atoms, acrylic acid and methacrylic acid, and ethylene/propylene/diene copolymers, said ethylene/propylene/diene copolymer having a Mooney viscosity of less than 20 at 125°C, said copolymer having been grafted with up to 5% by weight of at least one ethylenically-unsaturated carboxylic acid or anhydride, or derivative thereof;
contacting the second substrate with the molten adhesive and cooling the resultant bonded structure.

In preferred embodiments of the processes of the present invention, at least one and preferably both of the substrates is formed from polypropylene, including mineral-filled, foamed or woven polypropylene.

A variety of polyolefins may be used in the adhesive of the present invention, as defined above. Different polyolefins are used for the components described as (a) and (b) above, and those polyolefins in the form used in the adhesive must be compatible in order that the resultant adhesive has acceptable properties.

The copolymer of component (a) is polypropylene. As used herein, the expression "polypropylene" refers to homopolymers of propylene, to impact or so-called block copolymers of propylene with ethylene in which the ethylene content is less than about 25% by weight and to random copolymers of propylene with ethylene in which the ethylene content is less than about 8% by weight.

The copolymer of component (b) may be a copolymer of ethylene and at least one comonomer selected from carbon monoxide, vinyl acetate, alkyl acrylates, alkyl methacrylates, in which the alkyl group has 1-4 carbon atoms, acrylic acid and methacrylic acid. In embodiments, the copolymer of component (b) is a copolymer of ethylene, alkyl acrylate and carbon monoxide. In other embodiments, the copolymer is characterized by having a heat of crystallization of less than 70 J/g. Moreover, if the copolymer is an ethylene/vinyl acetate copolymer, then the copolymer has a vinyl acetate content of at least 10% by weight. Examples of the copolymers are ethylene/vinyl acetate copolymers, ethylene/methyl acrylate copolymers, ethylene/ethyl acrylate copolymers, ethylene/butyl acrylate copolymers, ethylene/isobutyl acrylate copolymers, ethylene/vinyl acetate/carbon monoxide copolymers, ethylene/ethyl acrylate/carbon monoxide copolymers, ethylene/butyl acrylate/carbon monoxide copolymers, ethylene/ethyl methacrylate/carbon monoxide copolymers and ethylene/butyl methacrylate/carbon monoxide copolymers. While the copolymer of (b) may be used in an un-grafted state, it is preferred that the copolymer be grafted.

The monomer used in the grafting of the copolymers is at least one monomer selected from ethylenically unsaturated carboxylic acids and ethylenically unsaturated carboxylic acid anhydrides, including, less preferably, derivatives of such acids, and mixtures thereof. Examples of the acids and anhydrides, which may be mono-, di- or polycarboxylic acids, are acrylic acid, methacrylic acid, maleic acid, fumaric acid, itaconic acid, crotonic acid, itaconic anhydride, maleic anhydride, and substituted maleic anhydride, e.g. dimethyl maleic anhydride or citraconic anhydride, nadic anhydride, nadic methyl anhydride, and tetrahydrophthalic anhydride, maleic anhydride being particularly preferred. Examples of the derivatives of the unsaturated acids are salts, amides, imides and esters e.g. mono- and disodium maleate, acrylamide, maleimide, glycidyl methacrylate and dimethyl fumarate. Techniques for the grafting of such monomers onto the copolymers are known e.g. as described in U.S. Patent 4 612 155 of R.A. Zelonka and C.S. Wong, which issued September 16, 1986, and in published European patent application No. 0 369 604 of D.J. Mitchell, published May 23, 1990. The present invention will be particularly described herein with reference to maleic anhydride as the grafting monomer.

Alternatively, the copolymer of (b) may be grafted or ungrafted copolymer of ethylene, propylene and a diene i.e. the so-called EPDM copolymers. Such copolymers have a Mooney viscosity of less than 20 at 125°C.

The adhesive composition of the present invention has a melt viscosity suitable for use as a hot melt adhesive, especially a melt viscosity of 1000-100 000 cps at 220°C, especially 10 000-75 000 cps at 220°C, and particularly 20 000-50 000 cps at 220°C. Melt viscosity is measured using a Brookfield viscometer at a shear rate of 0.35 sec⁻¹.

The melt index of the grafted copolymer of (a), when prepared separately, is preferably in the range of 100-500 dg/min, and especially 200-400 dg/min; as used herein, melt index is measured by the procedure of ASTM D-1238 (190/2.16, unless specified to the contrary). The grafted monomer content of the copolymer of (a), when prepared separately, is up to 5% by weight, especially at least 0.1% by weight, and in particular at least 0.5% by weight. In embodiments, the amount of grafted monomer is 0.5-2.0% by weight.

The melt index of the grafted copolymer or, where applicable, the ungrafted copolymer of (b), when prepared separately, is preferably at least 100 dg/min, and especially at least 250 dg/min. The -grafted monomer content of the copolymer of (b), when prepared separately, is up to 5% by weight and especially 0.1-2% by weight. In embodiments, the amount of grafted monomer is 0.5-2.0% by weight.

It is also known to use blends of grafted and ungrafted polyolefins to order to achieve a desired level of graft in a composition, and such blending in of ungrafted components may be used herein.

The adhesive composition of the present invention may be in the form of a physical admixture of the grafted copolymers of (a) and (b) described above. Such a physical admixture could be fed to a hot melt adhesive applicator. However, it is preferred that the adhesive composition be melt blended prior to being fed to the hot melt adhesive applicator, including for reasons of consistency of the adhesive composition that is actually applied to a substrate. Alternatively, the respective copolymers of the adhesive composition may be blended and then the blend subjected to a grafting process, using the monomers described herein, under melt conditions.

The adhesive is extruded directly onto a substrate i.e. while the adhesive is still in a molten condition. Apparatus suitable for the blending or mixing of the adhesive and for application of a hot melt adhesive to a substrate are known.

The adhesive is applied to a first substrate in a molten condition and then the second substrate is applied over the adhesive while the adhesive is still in a molten condition. Contact of the adhesive while molten with both substrates is important in order to achieve a good bond.

While a variety of substrates may be bonded together using the adhesive composition described herein, in preferred embodiments at least one and especially both substrates are formed from polypropylene. Examples of particularly preferred substrates are mineral-filled polypropylene e.g. mica-filled polypropylene, foamed polypropylene, and woven polypropylene including fabrics, woven tapes and the like.

The adhesive composition and process of the invention may be used in the bonding of substrates, especially polypropylene. In the latter instance, use of the adhesive composition permits the opportunity of recycling the bonded substrates as the polymeric components are based on or compatible with polypropylene. Such polypropylene would have a melt index (or melt flow index) and other characteristics of polypropylenes used in the forming of articles, which would depend in part on the particular end-use.

The adhesive forms strong bonds with polypropylene, as illustrated below, but may be used with other substrates. The adhesive may be used in a wide variety of industrial applications, including for example in the automotive industry, and in the manufacture of furniture, appliances and small electronic equipment.

The present invention is illustrated by the following examples:

### EXAMPLE I

A random copolymer of propylene with 4% of ethylene as comonomer and having a melt flow index (procedure of ASTM D1238 (230/2.16)) of 5 dg/min was grafted with 1.4% by weight of maleic anhydride using a melt grafting process and a free radical initiator. The melt index of the grafted copolymer obtained was 260 dg/min. This grafted copolymer is referred to below as component A.

An ethylene/vinyl acetate copolymer containing 28% by weight of vinyl acetate comonomer and having a melt index of 800 dg/min was grafted with 0.8% by weight of maleic anhydride using a melt grafting process and a free radical initiator. This grafted copolymer is referred to below as component B, and had a melt index after grafting of 400 dg/min.

Component C was an ethylene (70% by weight)/propylene (23% by weight)/hexadiene (4.4% by weight)/norbornadiene (1% by weight) polymer that had been grafted with maleic anhydride. The grafted polymer had a Mooney viscosity at 125°C of 22.

Component D was an ethylene (70% by weight)/propylene (23% by weight)/hexadiene (4.4% by weight)/norbornadiene (1% by weight) that had been grafted with maleic anhydride. The grafted polymer had a Mooney viscosity at 125°C of 10.

A series of hot-melt adhesives were prepared using component A. The adhesive was prepared using a Brabender mixer to melt blend component A with another polymeric component, were applicable, and cooled. The resultant adhesive was applied, using a hot melt adhesive applicator, to a mica-filled polypropylene sheet, formed from homopolymer polypropylene containing 35% by weight of mica. After application of the hot-melt adhesive to the mica-filled polypropylene sheet, the adhesive while still molten was contacted with either a polyethylene terephthalate (PET) woven fabric or a foamed polypropylene sheet.

The bonded substrates were then subjected to two tests viz. a room temperature 180° peel test and a 95°C creep test. The test procedures were as follows:

The 180° Peel Strength was determined using samples measuring 2.54 cm by 7.6 cm were peeled apart at ambient temperature, by peeling the substrates apart at an angle of 180° at a speed of 200 mm/min. The results are reported in lb/in.

The creep test involved holding one substrate in a horizontal position and attaching a 200 g weight to the other substrate. The weight was permitted to hang freely, forming a 90° angle to the horizontal substrate. The samples were the same size as those for the peel strength test. The samples being tested were placed in an oven at 95°C shortly after preparation. To pass this test, at least 80% of the samples tested must not show signs of creep after a period of seven days.

The results obtained were as follows:

**TABLE I**

| Polymeric Component* | Substrate | 180° Peel Strength | Failure Type | Creep Test |
|---|---|---|---|---|
| B | PET fabric | 26.8 | cohesive | passed |
| B | PP foam | 7.8 | substrate | passed |
| C | PET fabric | 23.0 | cohesive | failed |
| D | PET fabric | 27.6 | cohesive | passed |
| none | PET fabric | 23.6 | adhesive | - |

| | | | | |
|---|---|---|---|---|
| * The amount of Component A in all samples was 80% by weight, except the last sample where the amount was 100% by weight i.e. there was no other polymeric component. | | | | |

The use of component A by itself as the hot-melt adhesive provided a bond with a good 180° Peel Strength but the failure type was adhesive failure i.e. the failure of the bond was between the adhesive and the substrate. Such a failure was deemed to be unacceptable.

The adhesive containing component C as polymeric component showed an acceptable 180° Peel Strength with cohesive failure but the creep test was a failure. Thus, this adhesive was also deemed to be unacceptable.

The remaining adhesive compositions shown in Table I were acceptable in both 180° peel strength and in the creep test.

### EXAMPLE II

Blends of (i) a random copolymer of propylene with 4% of ethylene as comonomer and having a melt flow index of 5 dg/min and (ii) an ethylene/vinyl acetate copolymer containing 28% by weight of vinyl acetate comonomer and having a melt index of 800 dg/min, were grafted with maleic anhydride using a melt grafting process and a free radical initiator.

Further details and the results obtained are given in Table II. The creep test and 180° peel tests were carried out according to the procedures outlined in Example I, using PET fabric.

In Run 1, the blend contained 10% of the ethylene/vinyl acetate copolymer, and had a graft level of 0.9%. In Run 2, the blend contained 20% of the ethylene/vinyl acetate copolymer, and had a graft level of 0.8%.

The results show that a composition that was blended and then grafted passed the creep and 180° peel tests.

### EXAMPLE III

The procedure of Run 2 was repeated, except that maleic anhydride was not fed to the extruder. The results obtained are given in Table II as Run 3.

The results show that the composition passed the creep and 180° peel tests.

**TABLE II**

| Run No. | Substrate | 180° Peel Strength | Failure Type | Creep Test |
|---|---|---|---|---|
| 1 | PET fabric | 34 | cohesive | passed |
| 2 | PET fabric | 29 | cohesive | passed |
| 3 | PET fabric | 24 | cohesive | passed |

## Claims

1. An adhesive composition comprising a melt blend of:
(a) 50-95% by weight of polypropylene or a copolymer of propylene and ethylene in which the ethylene content is less than 25% by weight, that has been grafted with up to 5% by weight of at least one ethylenically-unsaturated carboxylic acid or anhydride, or derivative thereof; and
(b) 5-50% by weight of at least one copolymer of ethylene and at least one comonomer selected from carbon monoxide, vinyl acetate, alkyl acrylates, alkyl methacrylates, in which the alkyl group has 1-4 carbon atoms, acrylic acid and methacrylic acid, and ethylene/propylene/diene copolymers, said ethylene/propylene/diene copolymer having a Mooney viscosity of less than 20 at 125°C, said copolymer having been grafted with up to 5% by weight of at least one ethylenically-unsaturated carboxylic acid or anhydride, or derivative thereof.

2. A composition according to claim 1 in which the copolymer (b) is a copolymer of ethylene and about 28% by weight vinyl acetate comonomer.

3. A composition according to claim 1 in which the blend is in the form of a melt blend.

4. A composition according to any one of the preceding claims in which the polymer of (b) has been grafted with 0.5-2.0% by weight of the ethylenically unsaturated carboxylic acid or anhydride, or derivative thereof.

5. A composition according to any one of the preceding claims in which the melt viscosity is 10000-75000 cps at 220°C.

6. A composition according to claim 5 in which the melt viscosity is 20000-50000 cps at 220°C.

7. A composition according to any one of the preceding claims in which the polymer of (a) has been grafted with at least 0.1% by weight of said at least one ethylenically unsaturated carboxylic acid or anhydride, or derivative thereof.

8. A composition according to any one of claims 1 to 7 in which the polymer of (a) has been grafted with 0.5% to 5% by weight of said at least one ethylenically unsaturated carboxylic acid or anhydride, or derivative thereof.

9. A process for the bonding of a first substrate to a second substrate comprising coating the first substrate with a molten composition of a blend of:
(a) 50-95% by weight of polypropylene or a copolymer of propylene and ethylene in which the ethylene content is less than 25% by weight, that has been grafted with up to 5% by weight of at least one ethylenically-unsaturated carboxylic acid or anhydride, or derivative thereof; and
(b) 5-50% by weight of at least one copolymer of ethylene and at least one comonomer selected from carbon monoxide, vinyl acetate, alkyl acrylates, alkyl methacrylates, in which the alkyl group has 1-4 carbon atoms, acrylic acid and methacrylic acid, and ethylene/propylene/diene copolymers, said ethylene/propylene/diene copolymer having a Mooney viscosity of less than 20 at 125°C, said copolymer having been grafted with up to 5% by weight of at least one ethylenically-unsaturated carboxylic acid or anhydride, or derivative thereof;
contacting the second substrate with the molten adhesive and cooling the resultant bonded structure.

10. A process according to claim 9, in which the copolymer (b) is a copolymer of ethylene and about 28% by weight vinyl acetate comonomer.

11. A process according to claim 9 or claim 10 in which the blend has been grafted with 0.5-2.0% by weight of at least one ethylenically-unsaturated carboxylic acid or anhydride.

12. A process according to any one of claims 9 to 11 in which at least one substrate is formed from polypropylene.

13. A process according to any one of claims 9 to 11 in which both of the substrates are formed from polypropylene.

14. A process according to claim 12 or claim 13 in which the polypropylene substrate is selected from mineral-filled, foam or woven polypropylene.

15. A process according to claims 9 to 14 in which the melt viscosity is 10000-75000 cps at 220°C.

16. A process according to claim 15 in which the melt viscosity is 20000-50000 cps at 220°C.

## Patentansprüche

1. Kleberzusammensetzung, umfassend ein Schmelzgemisch aus:
(a) 50-95 Gew.-% Polypropylen oder eines Copolymers von Propylen mit Ethylen, worin der Ethylengehalt geringer als 25 Gew.-% ist, das mit bis zu 5 Gew.-% zumindest einer/eines ethylenisch ungesättigten Carbonsäure oder Carbonsäureanhydrids oder Derivats davon gepfropft worden ist; und
(b) 5-50 Gew.-% zumindest eines Copolymers von Ethylen mit zumindest einem Comonomer, das aus Kohlenmonoxid, Vinylacetat, Alkylacrylaten, Alkylmethacrylaten, worin die Alkylgruppe 1 bis 4 Kohlenstoffatome aufweist, Acrylsäure und Methacrylsäure, sowie Ethylen/Propylen/Dien-Copolymeren ausgewählt ist, wobei das Ethylen/Propylen/Dien-Copolymer bei 125°C eine Mooney-Viskosität von weniger als 20 aufweist, wobei das Copolymer mit bis zu 5 Gew.-% zumindest einer/eines ethylenisch ungesättigten Carbonsäure oder Carbonsäureanhydrids oder Derivats davon gepfropft worden ist.

2. Zusammensetzung nach Anspruch 1, bei der das Copolymer (b) ein Copolymer von Ethylen mit etwa 28 Gew.-% Vinylacetat-Comonomer ist.

3. Zusammensetzung nach Anspruch 1, bei der das Gemisch in Form eines Schmelzgemisches vorliegt.

4. Zusammensetzung nach einem der vorangegangenen Ansprüche, bei der das Polymer (b) mit 0,5 bis 2,0 Gew.-% der/des ethylenisch ungesättigten Carbonsäure oder Carbonsäureanhydrids oder Derivats davon gepfropft worden ist.

5. Zusammensetzung nach einem der vorangegangenen Ansprüche, bei der die Schmelzviskosität bei 220°C 10.000 bis 75.000 cp beträgt.

6. Zusammensetzung nach Anspruch 5, bei der die Schmelzviskosität bei 220°C 20.000 bis 50.000 cp beträgt.

7. Zusammensetzung nach einem der vorangegangenen Ansprüche, bei der das Polymer (a) mit zumindest 0,1 Gew.-% der/des zumindest einen ethylenisch ungesättigten Carbonsäure oder Carbonsäureanhydrids oder Derivats davon gepfropft worden ist.

8. Zusammensetzung nach einem der Ansprüche 1 bis 7, bei der das Polymer (a) mit 0,5 bis 5 Gew.-% der/des zumindest einen ethylenisch ungesättigten Carbonsäure oder Carbonsäureanhydrids oder Derivats davon gepfropft worden ist.

9. Verfahren zum Verkleben eines ersten Substrats mit einem zweiten Substrat, umfassend das Beschichten des ersten Substrats mit einer geschmolzenen Zusammensetzung aus einem Gemisch aus:
(a) 50-95 Gew.-% Polypropylen oder eines Copolymers von Propylen mit Ethylen, worin der Ethylengehalt geringer als 25 Gew.-% ist, das mit bis zu 5 Gew.-% zumindest einer/eines ethylenisch ungesättigten Carbonsäure oder Carbonsäureanhydrids oder Derivats davon gepfropft worden ist; und
(b) 5-50 Gew.-% zumindest eines Copolymers von Ethylen mit zumindest einem Comonomer, das aus Kohlenmonoxid, Vinylacetat, Alkylacrylaten, Alkylmethacrylaten, worin die Alkylgruppe 1 bis 4 Kohlenstoffatome aufweist, Acrylsäure und Methacrylsäure, sowie Ethylen/Propylen/Dien-Copolymeren ausgewählt ist, wobei das Ethylen/Propylen/Dien-Copolymer bei 125°C eine Mooney-Viskosität von weniger als 20 aufweist, wobei das Copolymer mit bis zu 5 Gew.-% zumindest einer/eines ethylenisch ungesättigten Carbonsäure oder Carbonsäureanhydrids oder Derivats davon gepfropft worden ist;
das In-Kontakt-Bringen des zweiten Substrats mit dem geschmolzenen Kleber und das Abkühlen der resultierenden verklebten Struktur.

10. Verfahren nach Anspruch 9, bei dem das Copolymer (b) ein Copolymer von Ethylen mit etwa 28 Gew.-% Vinyacetat-Comonomer ist.

11. Verfahren nach Anspruch 9 oder 10, bei dem das Gemisch mit 0,5 bis 2,0 Gew.-% zumindest einer/eines ethylenisch ungesättigten Carbonsäure oder Carbonsäureanhydrids gepfropft worden ist.

12. Verfahren nach einem der Ansprüche 9 bis 11, bei dem zumindest ein Substrat aus Polypropylen besteht.

13. Verfahren nach einem der Ansprüche 9 bis 11, bei dem beide Substrate aus Polypropylen bestehen.

14. Verfahren nach Anspruch 12 oder 13, bei dem das Polypropylen-Substrat aus mineralgefülltem, geschäumtem oder gewebtem Polypropylen ausgewählt ist.

15. Verfahren nach Anspruch 9 bis 14, bei dem die Schmelzviskosität bei 220°C 10.000 bis 75.000 cp beträgt.

16. Verfahren nach Anspruch 15, bei dem die Schmelzviskosität bei 220°C 20.000 bis 50.000 cp beträgt.

## Revendications

1. Composition adhésive comprenant un mélange à l'état fondu de :
(a) 50-95% en poids de polypropylène ou d'un copolymère de propylène et d'éthylène dans lequel la teneur en éthylène est moindre que 25% en poids, qui a été greffé avec jusqu'à 5% en poids d'au moins un acide carboxylique éthylèniquement insaturé ou d'un anhydride, ou dérivé de celui-ci ; et
(b) 5-50% en poids d'au moins un copolymère d'éthylène et d'au moins un comonomère choisi parmi le monoxyde de carbone, le vinylacétate, les alkyl acrylates, les alkyl méthacrylates, dans lesquels le groupe alkyl a de 1 à 4 atomes de carbone, l'acide acrylique et l'acide méthacrylique, et des copolymères éthylène / propylène / diène, ledit copolymère éthylène / propylène / diène ayant une viscosité Mooney de moins de 20 à 125°C, ledit copolymère ayant été greffé avec jusqu'à 5% en poids d'au moins un acide carboxylique éthylèniquement insaturé ou anhydride, ou dérivé de celui-ci.

2. Composition selon la revendication 1, dans laquelle le copolymère (b) est un copolymère d'éthylène et d'environ 28% en poids de comonomère vinyl acétate.

3. Composition selon la revendication 1, dans laquelle le mélange est sous la forme d'un mélange à l'état fondu.

4. Composition selon l'une quelconque des revendications précédentes dans laquelle le polymère de (b) a été greffé avec 0,5-2,0% en poids de l'acide carboxylique éthylèniquement insaturé ou anhydride, ou dérivé de celui-ci.

5. Composition selon l'une quelconque des revendications précédentes dans laquelle la viscosité du prduit fondu est 10000-75000 cps à 220°C.

6. Composition selon la revendication 5, dans laquelle la viscosité du produit fondu est 20000-50000 cps à 220°C.

7. Composition selon l'une quelconque des revendications précédentes dans laquelle le polymère de (a) a été greffé avec au moins 0,1% en poids dudit au moins un acide carboxylique éthylèniquement insaturé ou anhydride, ou dérivé de celui-ci.

8. Composition selon l'une quelconque des revendications 1 à 7, dans laquelle le polymère de (a) a été greffé avec de 0,5% à 5% en poids dudit au moins un acide carboxylique éthylèniquement insaturé ou anhydride, ou dérivé de celui-ci.

9. Procédé pour la liaison d'un premier substrat à un deuxième substrat consistant à revêtir le premier substrat avec une composition fondue d'un mélange de :
(a) 50-95% en poids de polypropylène ou d'un copolymère de propylène et d'éthylène dans lequel la teneur en éthylène est moindre que 25% en poids, qui a été greffé avec jusqu'à 5% en poids d'au moins un acide carboxylique éthylèniquement insaturé ou d'un anhydride ou dérivé de celui ;et
(b) 5-50% en poids d'au moins un copolymère d'éthylène et d'au moins un comonomère choisi parmi le monoxyde de carbone, le vinylacétate, les alkyl acrylates, les alkyl méthacrylates, dans lesquels le groupe alkyl a de 1 à 4 atomes de carbone, l'acide acrylique et l'acide méthacrylique, et des copolymères éthylène / propylène / diène, ledit copolymère éthylène / propylène / diène ayant une viscosité Mooney de moins de 20 à 125°C, ledit copolymère ayant été greffé avec jusqu'à 5% en poids d'au moins un acide carboxylique éthylèniquement insaturé ou anhydride, ou dérivé de celui-ci ;
à mettre en contact le second substrat avec l'adhésif fondu et à refroidir la structure résultante liée.

10. Procédé selon la revendication 9, dans lequel le copolymère (b) est un copolymère d'éthylène et d'environ 28% en poids de comonomère vinylacétate.

11. Procédé selon la revendication 9 ou la revendication 10, dans lequel le mélange a été greffé avec de 0,5 à 2% en poids d'au moins un acide carboxylique éthylèniquement insaturé ou d'un anhydride.

12. Procédé selon l'une quelconque des revendications 9 à 11, dans lequel au moins un substrat est formé à partir du polypropylène.

13. Procédé selon l'une quelconque des revendications 9 à 11, dans lequel les deux substrats sont formés à partir de polypropylène.

14. Procédé selon la revendication 12 ou la revendication 13, dans lequel le substrat de polypropylène est choisi parmi le polypropylène chargé de matière minérale, tissé ou en mousse.

15. Procédé selon les revendications 9 à 14, dans lequel la viscosité du produit fondu est 10000-75000 cps à 220°C.

16. Procédé selon la revendication 15, dans lequel la viscosité du produit fondu est 20000-50000 cps à 220°C.
